# EUROPÄISCHE PATENTSCHRIFT

(11) **EP 1 819 981 B1**
(45) Veröffentlichungstag und Bekanntmachung des Hinweises auf die Patenterteilung: **30.04.2008**
(21) Anmeldenummer: 05850224.6
(22) Anmeldetag: 02.12.2005
(51) Int. Cl.: G01B 5/20

(54) **MESSSYSTEM ZUR VERMESSUNG DER ZAHNGEOMETRIE EINES ZAHNRADES**
MEASURING SYSTEM FOR MEASURING THE TOOTH DIMENSIONS OF A GEAR WHEEL
SYSTEME DE MESURE POUR MESURER LA GEOMETRIE DE DENTS D'UNE ROUE DENTEE

(30) Priorität: 06.12.2004 DE 102004058657
(43) Veröffentlichungstag der Anmeldung: 22.08.2007
(73) Patentinhaber: Frenco Gmbh, 90518 Altdorf (DE)
(72) Erfinder: POMMER, Andreas, 90518 Altdorf (DE)
(74) Vertreter: Brose, Manfred
(86) Internationale Anmeldenummer: PCT/EP2005/012873
(87) Internationale Veröffentlichungsnummer: WO 2006/061145

(56) Entgegenhaltungen:
- EP-A- 0 131 537
- DE-C1- 19 519 429
- GB-A- 1 472 628
- US-A- 2 780 007

## Beschreibung

Die Erfindungbetrifft ein Messsystem zur Vermessung der Zahngeometrie eines Zahnrades (Prüfling), insbesondere eines Stirn- oder Kegelzahnrades.

Aus der DE-PS 195 19 429 (Ford) ist ein Messsystem der vorbezeichneten Art bekannt, bei dem der Prüfling mit einem Lehrzahnrad (Wälzmeister) in Kontakt tritt. Hierbei wird beispielsweise der Wälzmeister durch den angetriebenen Prüfling mitgedreht. Zeigt der Quotient aus den Drehgeschwindigkeiten von Prüfling und Wälzmeister Abweichungen vom Sollwert, dann ist dieses ein Hinweis auf Abweichungen der Zahnflanke des Prüflings vom Sollwert. Um jedoch fehlerhafte Messpunkte eines Messlaufs und damit die Abweichung einer Zahnflanke vom Sollwert eindeutig einer bestimmten Zahnflanke des Prüflings zuordnen zu können, sind die Zähne des Wälzmeisters mindestens mit doppelter Teilung des Prüflings angeordnet, sodass immer der übernächste Zahn des Prüflings vermessen wird. Um sämtliche Zähne des Prüflings zu vermessen, sind daher mehrere Messläufe notwendig.

Das bekannte Messsystem hat somit folgende Nachteile:

Prüfling und Wälzmeister müssen die gleiche Grundkreisteilung und den gleichen Schrägungswinkel haben. Das bedeutet, dass stets passende Wälzmeister mit unterschiedlicher Teilung vorhanden sein müssen und ein Verschleiss am Wälzmeister führt in der Regel zu seinem Ausfall. Da ferner mehrere Messläufe für jeden Prüfling notwendig sind, ist die hierfür benötigte Zeit beträchtlich.

Aus EP 0131537 A1 (BHS Höfler) ist ein Gerät mit einer Achsanordnung bekannt, die es erlaubt, eine evolventische Zahnflanke gesteuert zu durchfahren. Hierfür wird das Tastelement stets an der gleichen Stelle mit dem Prüfling in Kontakt gebracht. Würde eine Kugel als Tastelement verwendet, was jedoch nicht beschrieben ist, so würde sich beispielsweise eine linienförmige Abtastung ergeben. Dieses ist typisch für Geräte der Koordinatenmesstechnik. Es wird jedoch kein abwälzendes System beschrieben, da das Durchlaufen der Zahnflanke durch steuern der linearen und rotativen Geräteachsen erfolgt. Das Tastelement gleitet vom Gerät geführt über die Oberfläche. Das eigentliche Tastelement wälzt sich selbst nicht auf dem Prüfling ab und ist diesen Gerätetyp von untergeordneter Bedeutung.

Aus DE 1 623 171 (Ford) ist ein Messsystem bekannt, bei dem ein kegeliger Stift zum Abwälzen mit einem Prüfling verwendet wird. Der kegelige Stift stellt eine Nachbildung der Oberfläche des Gegenstück des Prüflings dar und erlaubt somit eine reguläre Abwälzung mit fester , gleichförmiger Übersetzung durchzuführen. Abweichungen von dieser festen Übersetzung werden aufgezeichnet. Der Stift ist justierbar und austauschbar um jeweils einem anderen Prüfling angepasst werden zu können.

In der US-PS 2 780 007 (Pomernacki) wird ein Messsystem zur Zweiflankenwälzprüfung mit zwei rotierenden Rädern beschrieben. Das System besteht aus einem Wälzmeister mit streng evolventischen Flanken und dem Prüfling. Es werden jedoch nicht mehr vollständige Lehrzahnräder verwendet, sondern nur noch Zahnsegmente dieser Räder, die jedoch immer Teil einer streng evolventischen Grundgeometrie sind. Der Kontakt zwischen dem Wälzmeister und dem Prüfling ist immer ein kurzer Linienkontakt. Aus diesem Grund kann man durch den reduzierten Zahnkontakt dieses Messsystem als eine Erweiterung der Zweiflankenwälzprüfung ansehen, die von der Summenfehlerprüfung weg und näher an die Einzelfehlerprüfung führt. Diesem bekannten System haftet jedoch der Nachteil an, dass der Wälzmeister in Hinblick auf Profilform, Teilung und Schrägungswinkel eindeutig zum jeweiligen Prüfling passen muss.

Der Erfindung liegt daher die Aufgabe zugrunde, ein Messsystem zu schaffen, das die verbeschriebenen Nachteile vermeidet.

Diese Aufgabe wird nach der Erfindung dadurch gelöst, dass das Messsystem auch nach dem Kennzeichen von Anspruch 1 ausgelegt ist.

In den abhängigen Ansprüchen werden Fortbildungen und Ausgestaltungen des Anspruchs 1 beansprucht.

In den Zeichnungen sind Ausführungsbeispiele der Erfindung wiedergegeben. Es zeigen:

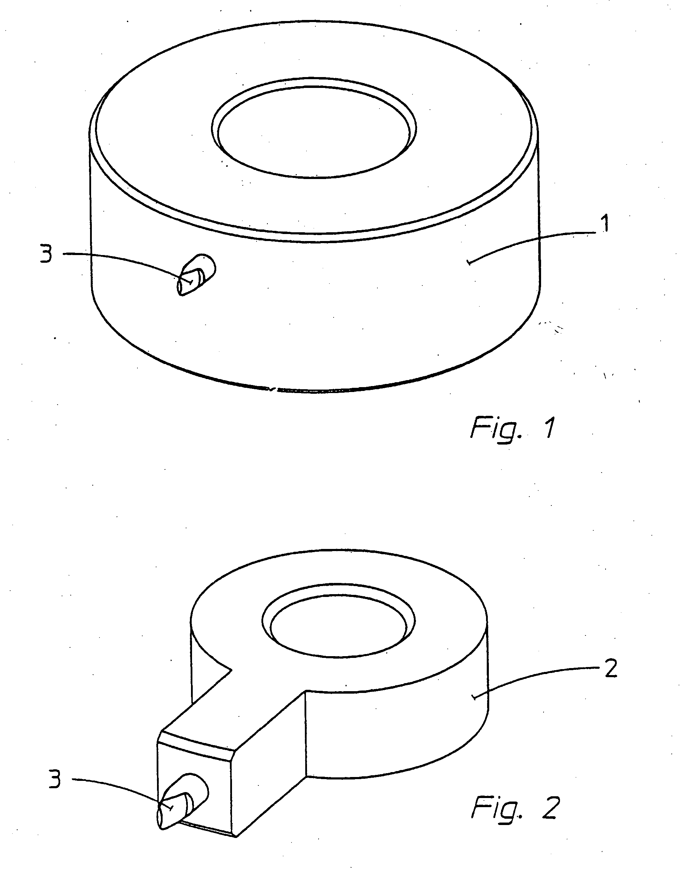

- Fig. 1: Ein schwenk- oder drehbar gelagertes Tragrad, an dem ein Taststift gelagert ist,
- Fig. 2: ein schwenk- oder drehbar gelagerter Tragarm, an dem ein Taststift gelagert ist,

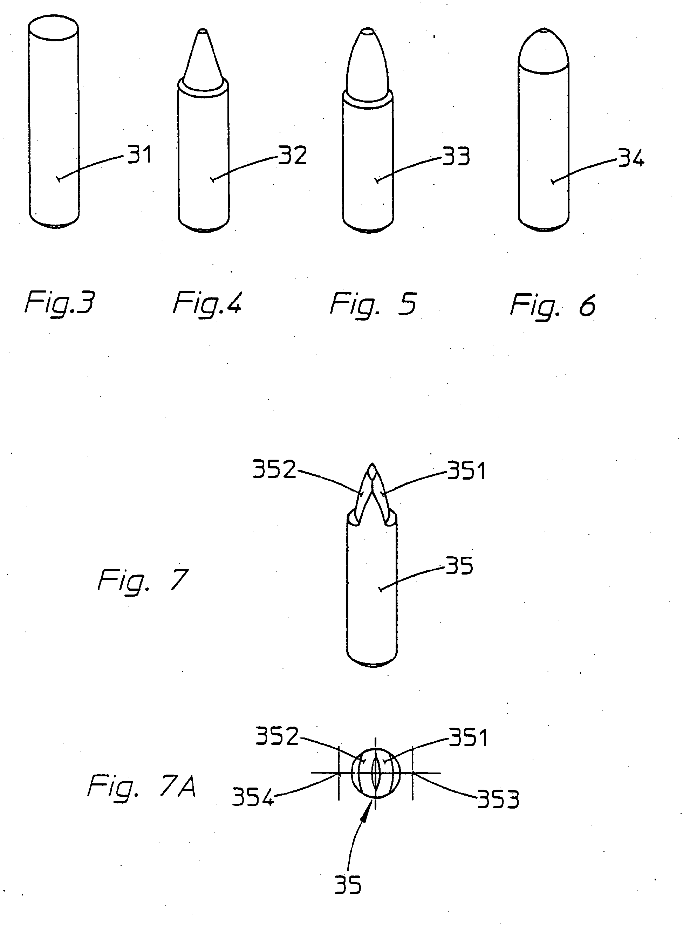

In den nachfolgenden Figuren 3 bis 7 sind sechs verschiedene Formen von Taststiften wiedergegeben und zwar in Form eines :
- Fig. 3: Kreis-Zylinders,
- Fig. 4: Kreis-Kegels,
- Fig. 5: Kreis-Evolventoids,
- Fig. 6: Kreis-Bogenausschnitts,
- Fig. 7: Taststiftes, der durch die Flächenabschnitte von zwei Flächen gebildet ist, die durch die Rotation eines Konturelementes um zwei exzentrisch gelagerte Rotationsachsen entstehen,
- Fig. 7A: eine Ansicht des Taststiftes aus Richtung des Pfeils VII A von Figur 7,

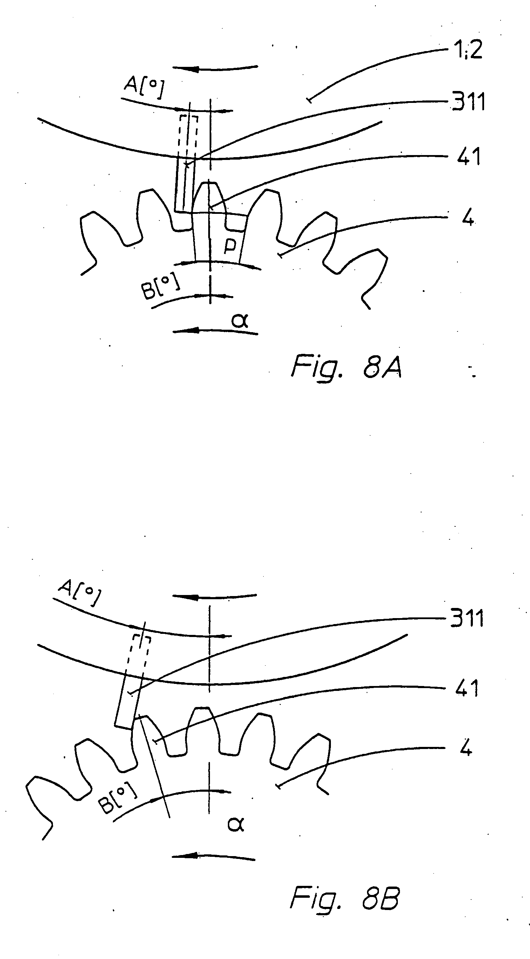

- Fig. 8A: Prüfling und Taststift zu Beginn einer Messstrecke,
- Fig. 8B: Prüfling und Taststift am Ende einer Messstrecke

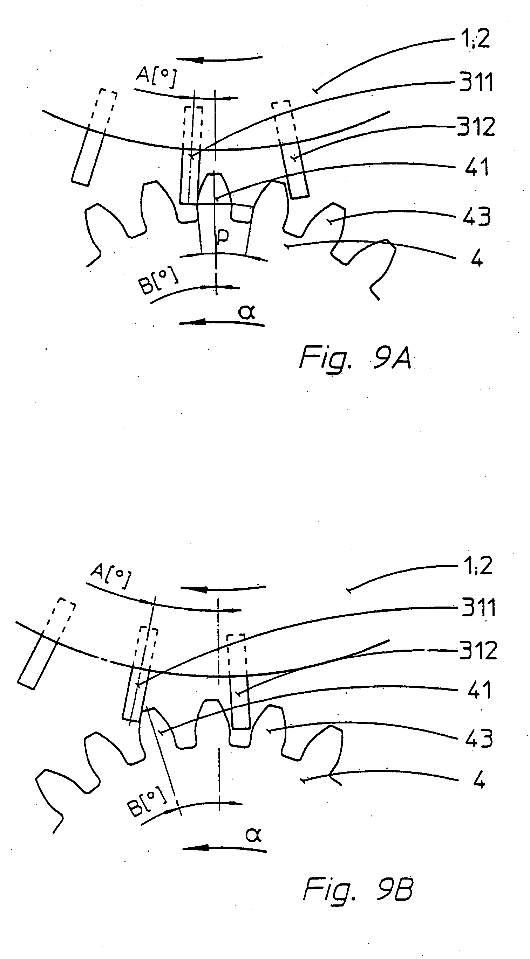

- Fig. 9A: Prüfling und Taststift zu Beginn einer Messstrecke mit einem Tragrad mit mehreren Taststiften,
- Fig. 9B: wie Figur 9A, jedoch am Ende einer ernsten Messstrecke und zu Beginn der nächsten Messstrecke,

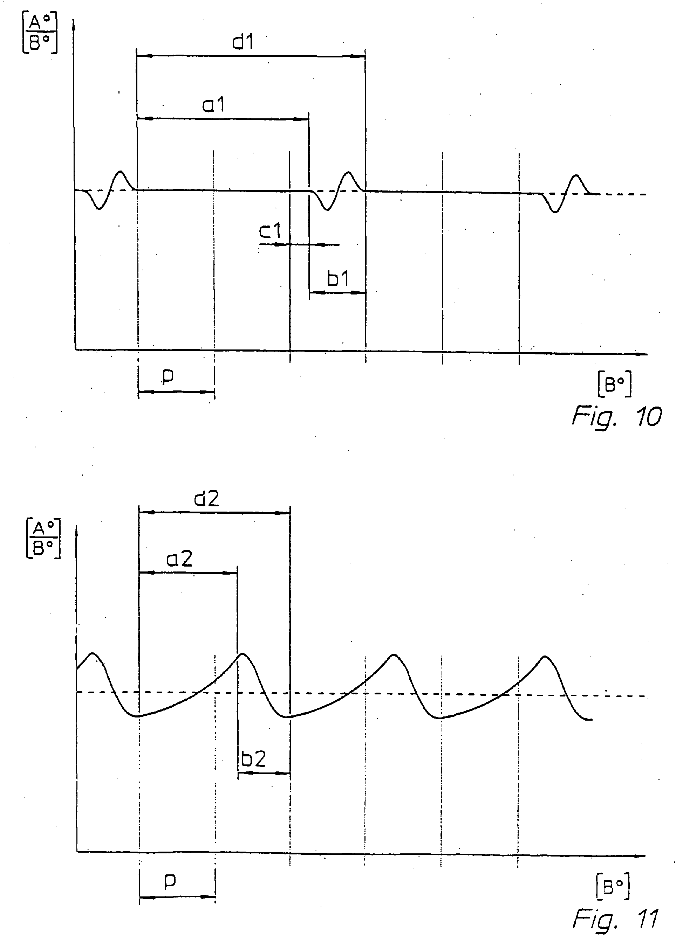

Die graphischen Darstellungen in den Figuren 10 und 11 zeigen den Quotienten des Drehwinkels von Prüfling und Taststift als Funktion des Drehwinkels des Prüflings mit einem Taststift in Form eines
- Fig. 10: Kreis-Evolventoids und
- Fig. 11: Kreis-Zylinders.

Das Messsystem zum Vermessen der Zahngeometrie grad- oder schrägverzahnter Stirn- oder Kegelräder 4 besteht aus einem schwenk- oder drehbar gelagerten Tragkörper 1; 2, an dem ein Tragstift 3 gelagert ist, der beim Messvorgang an der zu vermessenden Zahnflanke anliegt. Der Taststift 3 ist am Tragrad 1 oder am Tragarm 2 auswechselbar gelagert.

Der Taststift 3 kann verschiedene Formen haben und zwar die eines Kreis-Zylinders 31 nach Figur 3, eines Kreis-Kegels 32 nach Figur 4, eines Kreis-Evolventoids 33 nach Figur 5 und eines Kreis-Bogenabschnittes 34 nach Figur 6. In Figur 7 ist ein Taststift 35 wiedergegeben, dessen Form durch zwei Flächenabschnitte 351, 352 gebildet ist, die durch die Rotation eines Konturelements, z.B. eines Dreiecks, um zwei exzentrisch gelegene Rotationsachsen 353, 354 entstehen.

In Figur 8A ist die Stellung eines zylinderförmigen Taststiftes 311 an dem Zahn 41 eines Zahnrades 4 (Prüfling) zu Beginn einer Messstrecke wiedergegeben. Für den Messvorgang dreht sich das Zahnrad 4 entgegen dem Uhrzeigersinn dem Pfeil α entsprechend. Das Zahnrad 4 ist im Beispiel der Figur 8A bei dem Messvorgang der treibende Teil. Antreibendes Teil kann jedoch auch der Taststift 311 sein. Die Figur 8B zeigt das Ende des Messvorgangs, bei dem der gemeinsame Berührungspunkt die obere Kante des Zahnrades 41 erreicht hat. Während des Messvorgangs wälzt der Taststift 311 mit der Gegenflanke des Prüflings 4 ab und steht dabei zwischen den beiden Stellungen der Figuren 8A, 8B in tangentialem punktförmigen kontakt zu dieser.Hierdurch ist es möglich, Messpunkte eindeutigen Orten auf der Gegenflanke zuzuordnen. Die Messpunkte erhält man durch die kontinuierliche Auswertung der Winkelstellungen der Drehachsen von Prüfling 4 und dem Tragkörper 1; 2 des Taststiftes 3.

Ein evolventischer Taststift 33 wälzt mit kontinuierlicher Übersetzung auf der Zahnflanke eines Prüflings 4 ab. Im Ideafall ist daher während des Abwälzvorganges der Quotient i beider Drehwinkel konstant. Abweichungen der Flankenform beim Prüfling 4 führen zu einer Abweichung der Übersetzung und damit des Quotienten i, was ausgewertet werden kann. Am Ende der Zahnflanke, wie in Figur 8B für einen zylindrischen Taststift 311 wiedergegeben ist, verliert der Taststift 311 den Kontakt zum Zahn 41 des Prüflings 4 und die Bewegung b1, b2 (Figur 10, 11) wird diskontinuerlich. Werden mehrere Taststifte 311, 312 in kurzer Folge verwendet, wie dieses in den Figuren 9A, 9B dargestellt ist, dann beginnt mit kurzer Unterbrechung der nächste Messbereich erneut. Anderenfalls sind gesteuerte oder geregelte Achsen notwendige, um weitere Zähne des Prüflings 4 zu erreichen.

Ein nichtevolventischer Taststift, zum Beispiel der Taststift 31; 311 wälzt zwar stetig, jedoch mit diskontinuierlicher Übersetzung auf der Flanke eines Stirnrades ab. Die ideale Übersetzung nach Figur 10 ist aus der Geometrie des Taststiftes und des Prüflings berechenbar. Abweichungen der gemessenen Übersetzung von der vorausberechneten idealen Kurve können ausgewertet werden, sodass auf die Abweichungen des Prüflings zurückgeschlossen werden kann. Die Dauer des Abwälzens ist für geometrisch unterschiedliche Taststifte verschieden. Zylindrische Taststifte durchlaufen die Zahnflanke eines Prüflings jedoch innerhalb eines kürzeren Winkels A°, Figur 8A, 8B, als evolventische Taststifte 33. Dementsprechend kann bei einem Tragkörper 1; 2 mit mehreren Taststiften 311, 312, wie in den Figuren 9A, 9B dargestellt ist, die Abfolge nichtevolventischer Taststifte dichter gewählt werden als bei evolventischen Taststiften, so daß die Prüfung aller Zähne eines Prüflings mit weniger Messumläufen abgeschlossen werden kann. Dabei darf der Prüfling immer nur von einem Taststift berührt werden, da sonst der Ort einer Abweichung auf einer Zahnflanke nicht eindeutig identifizierbar ist.

In Figur 10 ist der Abwälzvorgang mit einem evolventischen Taststift 33 graphisch dargestellt. Auf der Abzisse ist der Drehwinkel B° des Prüflings 4 während des Prüflaufes und auf der Ordinate der Quotient aus dem Drehwinkel A° vom Taststift 3 und dem Drehwinkel B° des Prüflings 4 aufgetragen. Wenn die Flankenform des geprüften Zahnes einer idealen theoretischen Evolvente entspricht, dann ist die Prüfstrecke al eine parallel zur Abzisse verlaufende Gerade. An die erste Prüfstrecke al schließt sich eine Transportstrecke b1 an. Am Ende der Transportstrecke b1 erreicht der Taststift 33 frühestens den vierten Zahn. Die Teilung p des Prüflings 4 verdeutlicht dieses, indem die Prüfstrecke um einen kleinen Überdeckungsbetrag cl über den nächsten Zahn hinausragt. Die überdeckung ist größer als zwei. Hierdurch ist der minimale Taststift-Abstand d1 festgelegt.

In Figur 11 ist der gleiche Abwälzvorgang, jedoch mit einem zylindrischen Taststift 31; 311 dargestellt. Mit einem derartigen Taststift ist die Überdeckung kleiner als zwei, sodass die Taststifte auf dem Tragkörper 1; 2 dichter stehen können, als dieses bei dem vorbeschriebenen Evolventoid-Taststift 33 möglich ist. Der minimale Taststift-Abstand d2 ist in diesem Fall deutlich kleiner.

Die vorbeschriebenen verschiedenen Taststiftformen 31 bis 35 werden aus folgenden zwei Gründen benötigt:

Ein erster Grund ist, das durch die Auswahl einer geeigneten Stiftform sowohl die Dauer als auch der kinematische Ablauf des Eingriffs von Prüfling 4 und Taststift 3 beeinflusst werden kann. Dies ist für die Gestaltung der Abfolge der Stifte 311, 312, Figuren 9A, 9B im Tragkörper 1; 2 ein wichtiges Kriterium. Desweiteren beeinflusst die Krümmung der Stiftoberfläche die Belastung des Prüflings 4 durch den Messvorgang, was bei ungehärteten empfindlichen Prüflingen 4 berücksichtigt werden muss, denn es muss verhindert werden, dass die Spitzen der Taststifte die Flanken-Oberflächen des Prüflings 4 verkratzen.

Ein weiterer Grund ist, dass bei der Fertigung der Taststifte 3 aus höchstverschleissfesten Materialien aus wirtschaftlichen und/oder technischen Gründen die Wahl einer einfachen Stiftform erforderlich sein kann, da Taststifte 33 mit evolventischen Konturen nur mit einem sehr viel grösseren Aufwand hergestellt werden können, als Taststifte 31, 32 und 34 mit kreis-zylindrischen Konturen.

### Bezugszeichenliste

- 1.: Tragrad
- 2: Tragarm
- 3: Taststift
- 31: Kreis-Zylinder Taststift
- 311: Kreis-Zylinder Taststift
- 312: Kreis-Zylinder Taststift
- 32: Kreis-Kegel Taststift
- 33: Kreis-Evolventoid Taststift
- 34: Kreis-Bogenausschnitt Taststift
- 35: Flächenabschnitte Taststift
- 351: Flächenabschnitt
- 352: Flächenabschnitt
- 353: Rotationsachse
- 354: Rotationsachse
- 4: Prüfling
- 41: Zahn
- A°: Drehwinkel des Taststiftes
- B°: Drehwinkel des Prüflings
- a: Prüfstrecke
- a1: erste Prüfstrecke
- a2: erste Prüfstrecke
- b1: erste Transportstrecke
- b2: erste Transportstrecke
- c: Überdeckungsbetrag
- d1: minimaler Taststift Abstand
- d2: minimaler Taststift Abstand
- p: Teilung
- α: Drehrichtungs-Pfeil

## Patentansprüche

1. Messsystem zur Vermessung der Zahngeometrie eines Zahnrades (4), insbesondere eines Stirn- oder Kegelzahnrades, mit einem Tragkörper (1, 2) mit einem Taststift (3, 311, 312), mit jeweils einer drehbaren Achse für das Zahnrad (4) und den Tragkörper (1, 2) und mit einem Antrieb für den Tragkörper (1, 2) oder das Zahnrad (4), wobei der Taststift an der Zähhflanke anliegend diese bei einer Drehbewegung abwälzt, punktförmig eine Linie durchläuft und dabei kontinuierlich Messpunkte erfasst,
**dadurch gekennzeichnet, das**
an dem Tragkörper (1, 2) mehrere Taststifte (3, 311, 312) nicht teilungskonform aufeinanderfolgend angeordnet sind.

2. Messsystem nach Anspruch 1,
**dadurch gekennzeichnet, das**
der Taststift (3) die Konturelemente eines Kreis-Zylinders (31), eines Kreis-Evolventoids (33) oder eines Kreis-Bogenausschnitts (34) hat.

3. Messsystem nach Anspruch 1,
**dadurch gekennzeichnet, das**
die Form des Taststiftes (35) durch zwei Flächenabschnitte (351, 352) von zwei Flächen gebildet ist, die durch die Rotation eines Konturelements um zwei exzentrisch gelegene Rotationsachsen (353, 354) entstehen.

4. Messsystem nach Anspruch 3,
**dadurch gekennzeichnet, das**
die beiden Rotationsachsen (353, 354) und die Mittelachse des Taststiftes (35) auf einer Linie liegen.

## Claims

1. Measuring system for measuring the tooth geometry of a gearwheel (4), particularly a spur gearwheel or bevel gearwheel, with a carrier body (1, 2) with a scanning pin (3, 311, 312), with a respective rotational axis for the gearwheel (4) and the carrier body (1, 2) and with a drive for the carrier body (1, 2) or the gearwheel (4), wherein the scanning pin bearing against the tooth flank moves in rolling contact therewith during a rotational movement, runs through a line punctiformly and in that case continuously detects measuring points, **characterised in that** several scanning pins (3, 311, 312) are arranged on the carrier body (1, 2) in succession without conformity of pitch.

2. Measuring system according to claim 1, **characterised in that** the scanning pin (3) has the contour elements of a circular cylinder (31), a circular evolventoid (33) or a circular curve sector (34).

3. Measuring system according to claim 1, **characterised in that** the shape of the scanning pin (35) is formed by two surface sections (351, 352) of two surfaces which arise through rotation of a contour element about two eccentrically disposed axes (353, 354) of rotation.

4. Measuring system according to claim 3, **characterised in that** the two axes (353, 354) of rotation and the centre axis of the scanning pin (35) lie on a line.

## Revendications

1. Système de mesure pour mesurer la géométrie de dent d'une route dentée (4), en particulier d'une roue dentée droite ou conique, comportant un corps support (1, 2) muni d'un palpeur (3, 311, 312), comportant à chaque fois un axe rotatif pour la roue dentée (4) et le corps support (1, 2),
et comportant un entraînement pour le corps support (1, 2) ou la roue dentée (4), dans lequel le palpeur balaie le flanc de la dent en étant accolé à celui-ci dans un mouvement de rotation, décrit une ligne par points et relève ce faisant de manière continue des points de mesure,
**caractérisé en ce que**
plusieurs palpeurs (3, 311,312) sont disposés sur le corps support (1, 2) en se succédant de manière non conforme au pas.

2. Système de mesure selon la revendication 1,
**caractérisé en ce que**
le palpeur (3) a les éléments de contour d'un cylindre circulaire (31), d'une développante de cercle (33) ou d'un arc de cercle (34).

3. Système de mesure selon la revendication 1,
**caractérisé en ce que**
la forme du palpeur (35) est formée par deux sections de surface (351,352) de deux surfaces qui se créent par la rotation d'un élément de contour autour de deux axes de rotation (353, 354) disposés de manière excentrée.

4. Système de mesure selon la revendication 3,
**caractérisé en ce que**
les deux axes de rotation (353,354) et l'axe médian du palpeur (35) sont situés sur une ligne.
